Europäisches Patentamt

European Patent Office

Office européen des brevets

(11) Publication number: **0 177 002**
**A1**

## (12) EUROPEAN PATENT APPLICATION

(21) Application number: **85112364.6**

(22) Date of filing: **30.09.85**

(51) Int. Cl.⁴: **B 65 G 39/09**
**F 16 C 13/02**

(30) Priority: **05.10.84 IT 2345784 U**

(43) Date of publication of application:
**09.04.86 Bulletin 86/15**

(84) Designated Contracting States:
**AT BE CH DE FR GB LI LU NL SE**

(71) Applicant: **SIAT - Società Internazionale Applicazioni Techniche S.p.A.**
**Via G. Puecher, 22**
**I-22078 Turate (Como)(IT)**

(72) Inventor: **Lissoni, Adelio**
**Via Barlassina**
**I-21040 Vedano Olona, Varese(IT)**

(74) Representative: **Faggioni, Giovanmaria, Dr. et al,**
**Fumero-Studio Consulenza Brevetti Widenmayerstrasse 4/I**
**D-8000 München 22(DE)**

(54) Roller mounting arrangement, in roller conveyors and roller tables in general.

(57) A roller mounting arrangement, particularly on a roller conveyor or roller table, in which each roller comprises a cylindrical body (7) mounted rotatable on a fixed axial shaft or pin, the ends (5, 6) of which are mounted on a support frame. At least one of the ends of said pin, projecting from the end of the cylindrical body (7), has a non-circular cross-section arranged to fit exactly into a correspondingly shaped hole (3, 4) in the support frame, a clip spacer (8) being radially fitted over at least one of said ends (5, 6) of the central pin.

Fig.4

Fig.1

EP 0 177 002 A1

**0177002**

"ROLLER MOUNTING ARRANGEMENT, IN ROLLER CONVEYORS AND ROLLER TABLES IN GENERAL"

==°O°==

In constructing roller conveyors or roller tables in general, mounting the rollers on the respective support frame is a known problem.

Normally, for these applications, the rollers consist of elongated cylindrical bodies mounted rotatable by way of bearings on fixed pins or shafts, the ends of which emerge from the ends of the cylindrical bodies and are fixed on to the support frame by various techniques.

In a known arrangement, holes for housing the ends of the pins or shafts are provided in the two opposing sidepieces of the frame at regular intervals and with the distance between their axes slightly greater than the diameter of the cylindrical bodies, and supplementary means are also provided for locking these ends into said holes.

The object of the present invention is to provide a mounting arrangement for these rollers, which is of extreme constructional simplicity, allows easy roller fitting, and is of low cost. This result is attained in that at least one end of the pin or shaft, projecting from the end of the cylindrical body, has a non-circular cross-section, in particular polygonal, for example square or hexagonal, or merely comprising a flattened zone, and arranged to fit exactly into a correspondingly shaped hole in the support frame, and in that a spacer in the form of a clip is radially fitted over at least one end of the central pin after the roller has been mounted in its seat.

Further characteristics and advantages of the arrangement according to the invention will be apparent from the description of a preferred embodiment thereof given hereinafter and illustrated by way of example on the accompanying drawings, in which:

Fig.1 is a partly sectional side view of a roller mounted on the respective frame using the arrangement according to the invention;

Figs. 2 and 3 are views similar to that of Fig. 1, showing the roller while being mounted; and

Fig. 4 is a diagrammatic section through the line IV-IV of Fig. 1.

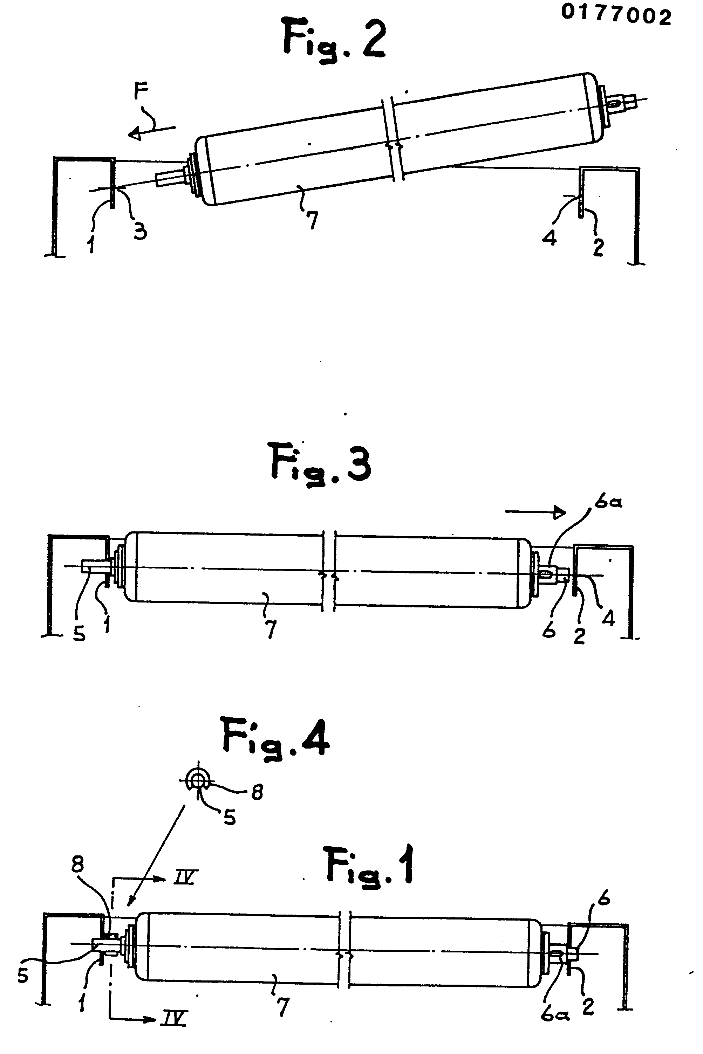

As shown in Fig. 1, the two sidepieces 1, 2 of the support frame comprise holes 3, 4 for receiving the support shaft ends 5 and 6 respectively, which emerge from the opposite ends of the cylindrical body 7 of the roller.

The end 5 is preferably cylindrical and elongated, whereas the end 6 is for example hexagonal and projects from a widened part 6a of the shaft, forming a shoulder. The hexagonal shape of the end 6 is not however binding, as in practice it is sufficient for the end 6 to be of non-circular cross-section, for example square or generally polygonal, or even merely comprising a flattened zone, so as to fit into the correspondingly shaped hole 4 without possibility of rotation.

Such a roller is mounted as follows. Firstly, the end 5 is inserted into the hole 3 in the frame sidepieces 1 by sliding the roller in the direction indicated by the arrow F, while keeping the end 6 temporarily raised above the sidepiece 2 (see fig. 2). Then, by pivoting the already inserted end 5, the end 6 is tilted to the inside of the sidepiece 2 (see fig. 3) in front of the hole 4, this being allowed by the fact that the end 5 is thoroughly inserted into the hole 3. Finally, the end 6 is inserted into the hole 4 until the shoulder of the widened part 6a is brought against the wall of the sidepiece 2 (see fig. 1).

When in this position, rotation of the axial pin is prevented by the exact fit of the hexagonal end 6 into the

0177002

hexagonal hole 4. To prevent moreover the roller from sliding axially in the opposite direction to that in which it was inserted into position, a spacer in the form of a clip 8 is mounted over the end 5 in the space between the sidepiece 1 and the opposing end of the cylinder 7.

The clip 8 can be constructed for example by moulding plastic material, as shown in fig. 4, or by suitably bending a metal band into a shape which enables it to be mounted over the end 5 by simple snap-fitting. In this respect, it performs no other function than that of a spacer, and is therefore not subjected to stresses which could damage it or expel it from its position.

It is apparent that the arrangement according to the present invention allows the rollers to be very simply and rapidly mounted, using means which are of very low cost, and practically without any tools.

0177002

## CLAIMS

1) A roller mounting arrangement, particularly on a roller conveyor or roller table, in which each roller comprises a cylindrical body mounted rotatable on a fixed axial shaft or pin, the ends of which are mounted on a support frame, characterised in that at least one of the ends of said pin, projecting from the end of the cylindrical body, has a non-circular cross-section arranged to fit exactly into a correspondingly shaped hole in the support frame, and in that a spacer is radially fitted over at least one of said ends of the central pin.

2) An arrangement as in claim 1), wherein said spacer is a clip spacer.

3) An arrangement as in claim 1), wherein said axial pin end of non-circular cross-section projects from a larger-diameter part of said pin, this part forming an axial abutment shoulder.

4) An arrangement as in claim 1), wherein said end carrying the clip spacer is the end opposite to that of non-circular cross-section and/or projecting from the axial abutment shoulder.

5) An arrangement as in claim 1), wherein said end carrying the clip spacer is the same axial pin end of non-circular cross-section.

6) An arrangement as in claim 1), wherein said axial pin end of non-circular cross-section is of square, hexagonal or generally polygonal cross-section, or comprises a flattened zone.

Fig. 2

0177002

Fig. 3

Fig. 4

Fig. 1

# EUROPEAN SEARCH REPORT

## DOCUMENTS CONSIDERED TO BE RELEVANT

EP 85112364.6

| Category | Citation of document with indication, where appropriate, of relevant passages | Relevant to claim | CLASSIFICATION OF THE APPLICATION (Int Cl 4) |
|---|---|---|---|
| X | GB - A - 820 882 (FISHER) | 1 | B 65 G 39/09 |
| A | * Fig. 1, position 13; fig. 2 * | 6 | F 16 C 13/02 |
| | -- | | |
| X | US - A - 2 593 089 (BARRY) | 1 | |
| A | * Fig. 1,9 * | 6 | |
| | -- | | |
| X | US - A - 1 919 495 (ALLEN) | 1 | |
| A | * Fig. 5 * | 6 | |
| | -- | | |
| X | GB - A - 1 477 316 (BROCKWAY) | 1 | |
| A | * Fig. 3 * | 6 | |
| | -- | | |
| A | US - A - 1 286 343 (KENDALL) | 1,4,5,6 | |
| | * Fig. 1, position 28 * | | TECHNICAL FIELDS SEARCHED (Int Cl 4) |
| | -- | | |
| A | GB - A - 717 102 (PARKER) | 1,4,5 | B 65 G |
| | * Page 1, line 76 * | | F 16 C |
| | -- | | |
| A | US - A - 1 499 920 (GODDEN) | 1,3 | |
| | * Fig. 3, position 18 * | | |
| | -- | | |
| A | GB - A - 2 045 871 (SAPCO) | 1,6 | |
| | * Fig. 1,4 * | | |
| | ---- | | |

The present search report has been drawn up for all claims

| Place of search | Date of completion of the search | Examiner |
|---|---|---|
| VIENNA | 10-01-1986 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82